# EUROPEAN PATENT APPLICATION

(11) **EP 4 657 676 A1**
(43) Date of publication of application: **03.12.2025**
(21) Application number: 23918696.8
(22) Date of filing: 28.12.2023
(51) Int. Cl.: H01R 25/14

(54) **WIRING DUCT RAIL AND WIRING SYSTEM**

(30) Priority: 26.01.2023 JP 2023010451
(71) Applicant: Panasonic Intellectual Property Management Co., Ltd., Kadoma-shi, Osaka 571-0057 (JP)
(72) Inventor: IKEDA, Satoshi, Kadoma-shi, 571-0057 Osaka (JP)
(74) Representative: Appelt, Christian W.
(86) International application number: PCT/JP2023/047326
(87) International publication number: WO 2024/157742

(57) **Abstract**

An object of the present disclosure is to provide a wiring duct rail that is capable of improving freedom in voltage that is used at a power supplying destination, while reducing electric power loss that occurs at the time of conversion into a desired voltage. A wiring duct rail (1) includes three or more conductors, including a reference conductor (110) to which a reference potential is imparted, a first conductor (111) to which a first potential that is different from the reference potential is imparted, and a second conductor (112) to which a second potential that is different from each of the reference potential and the first potential is imparted. A plurality of direct current electric powers based on potential difference among three or more potentials that include the reference potential, the first potential, and the second potential, are supplied to a load device (200) via these three or more conductors.

## Description

### Technical Field

The present disclosure relates to a wiring duct rail and a wiring system, and more particularly relates to a wiring duct rail and a wiring system for performing power supply of direct current electric power to a load device while retaining the load device so as to be capable of sliding movement.

### Background Art

PTL 1 describes a DC duct (wiring duct rail) that supplies direct current electric power to an adapter (load device) such as a USB socket or the like, while retaining the adapter so as to be capable of sliding movement. This DC duct is equipped with a duct rail (a wiring duct rail main unit in which two conductors are laid out and also a load device is retained so as to be capable of sliding movement along a lengthwise direction in a state in which the load device is in electrical contact with the two conductors) that has two conductive bars (two linear conductors to which two types of potential, which are a first potential and a second potential of inverse phase relative to the first potential, are respectively imparted) that are electrically connected to positive-side wiring and negative-side wiring, respectively, and a recessed portion in which the two conductive bars are accommodated.

The above adapter has two power receiving terminals and an electric power converter. The two power receiving terminals are electrically connected to the two conductive bars of the DC duct in a state of a fixing rib of the adapter being inserted into the recessed portion of the DC duct. The electric power converter converts direct current electric power received by the two power receiving terminals into direct current electric power of a desired voltage. Thus, the DC duct is capable of power supplying of direct current electric power of a desired voltage to various types of electrical equipment that operate under direct current electric power, such as smartphones, LED lighting equipment, and so forth, connected to the adapter.

In the related art, great electric power loss occurs at the adapter (load device) when converting the direct current electric power supplied from the DC duct (wiring duct rail) into the direct current electric power of the desired voltage. Also, freedom of voltage usable at the adapter is low in the related art.

### Citation List

### Patent Literature

Patent Literature 1: Japanese Patent Application Publication No. 2022-86852

### Summary of Invention

An object of the present disclosure is to provide a wiring duct rail and a wiring system that are capable of improving freedom in voltage that is used in a load device that is a power supplying destination of direct current electric power, while reducing electric power loss that occurs at the time of conversion into a desired voltage.

A wiring duct rail according to a first aspect of the present disclosure includes three or more conductors that include a reference conductor, a first conductor, and a second conductor. The reference conductor is a conductor to which a reference potential is imparted. The first conductor is a conductor to which a first potential. is imparted The first potential is a potential that is different from the reference potential. The second conductor is a conductor to which a second potential is imparted. The second potential is a potential that is different from each of the reference potential and the first potential. A plurality of direct current electric powers based on a potential difference among three or more potentials that include the reference potential, the first potential, and the second potential, are supplied to a load device via the three or more conductors.

A wiring system according to an aspect of the present disclosure includes the wiring duct rail.

### Brief Description of Drawings

[Fig. 1] Fig. 1 is an external perspective view of a wiring system including a wiring duct rail according to an embodiment of the present disclosure.
[Fig. 2] Fig. 2 is a block diagram of the wiring system.
[Fig. 3] Fig. 3 is a cross-sectional view schematically illustrating a cross-section of the wiring duct rail.
[Fig. 4] Fig. 4 is a block diagram of a first modification of the wiring system.
[Fig. 5] Fig. 5 is a cross-sectional view schematically illustrating a cross-section of a wiring duct rail according to the first modification.
[Fig. 6] Fig. 6 is a block diagram of a second modification of the wiring system.

### Description of Embodiments

### (1) Overview

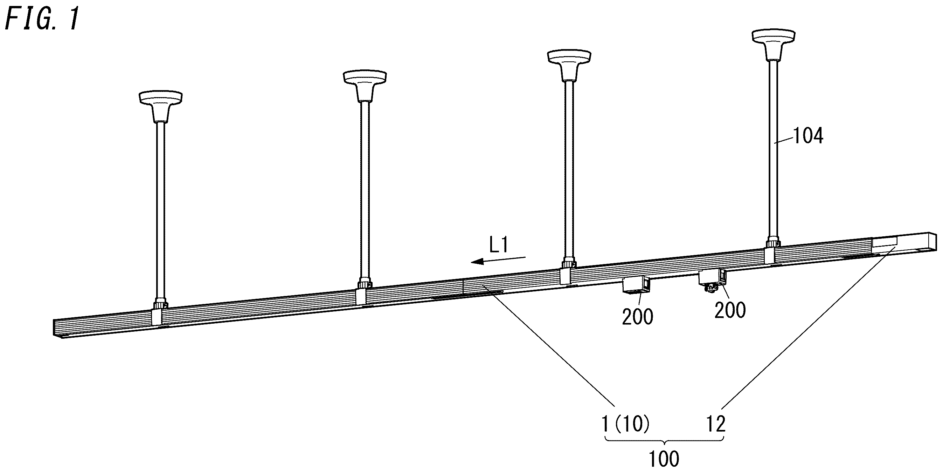

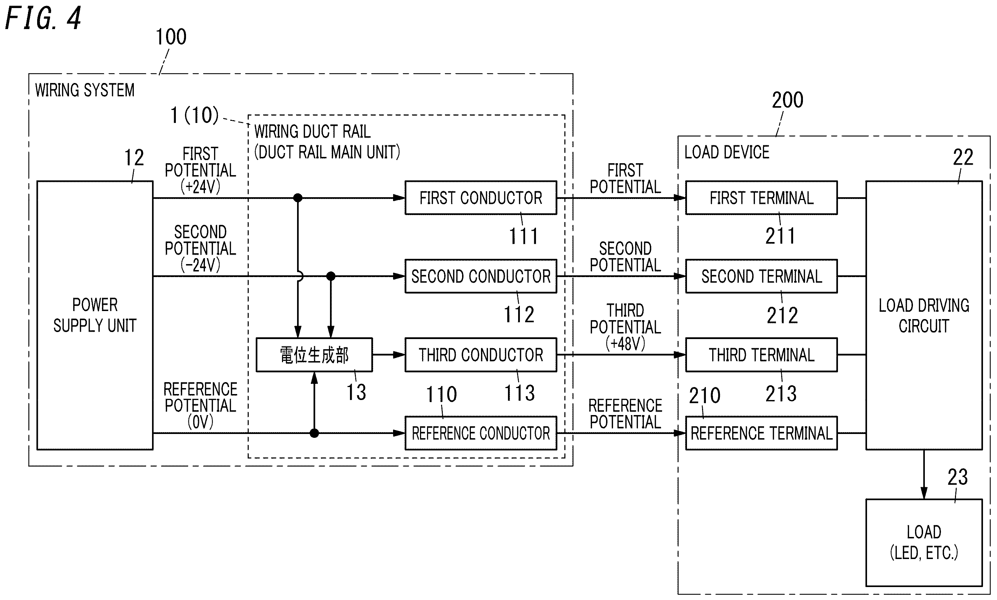

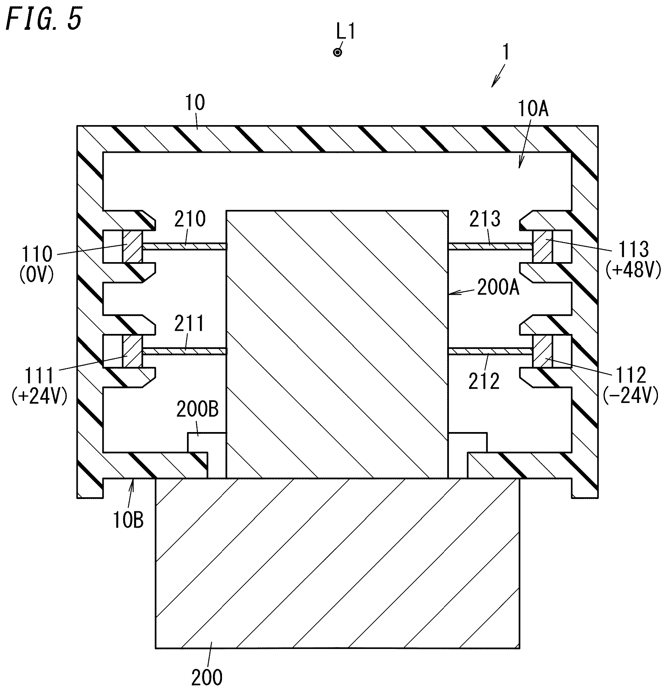

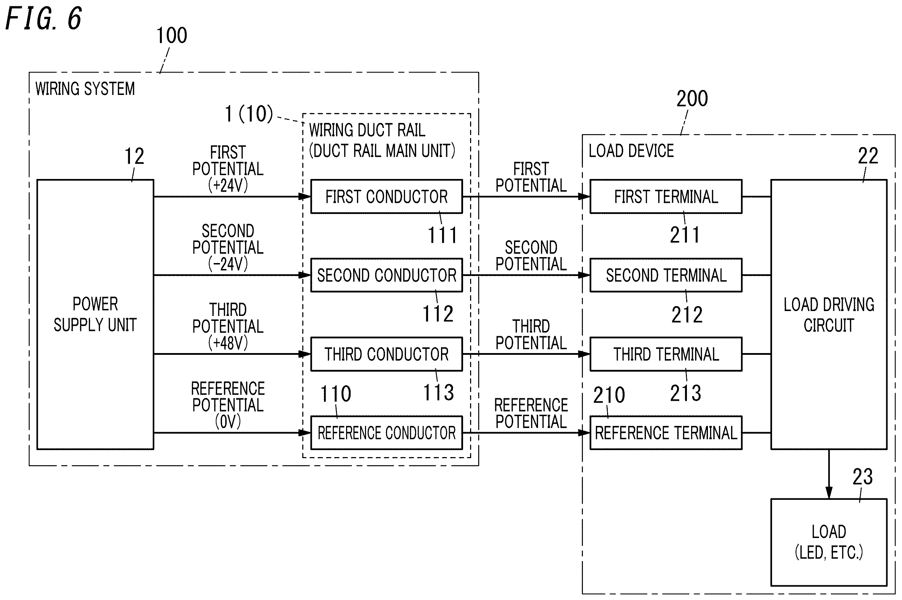

To begin with, an overview of the present disclosure will be described. The present disclosure includes an embodiment (see Fig. 1 to Fig. 3), and a first modification (see Fig. 4 and Fig. 5) and a second modification (see Fig. 6).

### (1-1) Wiring Duct Rail

A wiring duct rail according to the present disclosure is a wiring duct rail 1 for performing power supplying of direct current electric power to a load device 200 while retaining the load device 200 so as to be capable of sliding movement along a lengthwise direction L1 as illustrated in Fig. 1, throughout the embodiment, and the first modification and second modification.

Note that the expression, a wiring duct rail 1 "for" performing power supplying of direct current electric power, also includes, in addition to a case in which a power supply unit 12 for performing power supply of direct current electric power to the load device 200 is present outside of the wiring duct rail 1 and the wiring duct rail 1 simply transmits the direct current electric power supplied from the external power supply unit 12 to the load device 200 (see Fig. 1 to Fig. 6), a case in which the wiring duct rail 1 itself is equipped with the power supply unit 12 (omitted from illustration).

### (1-2) Load Device

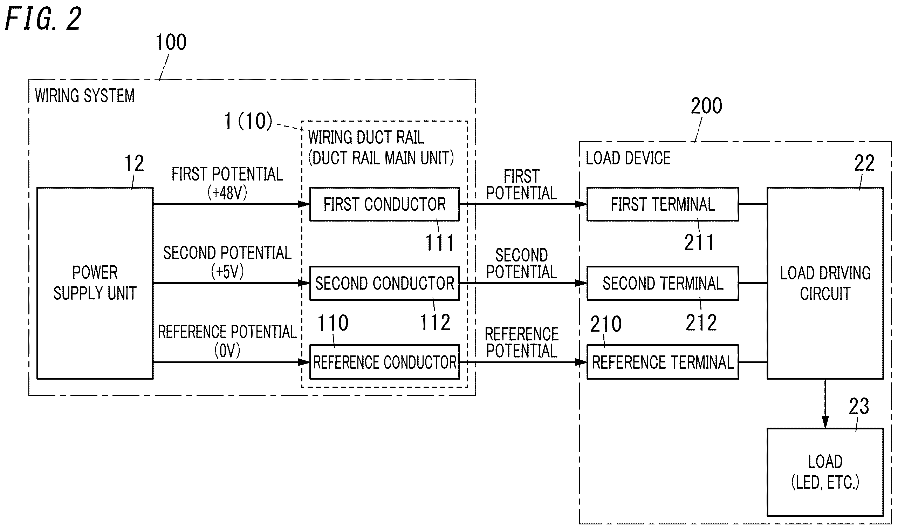

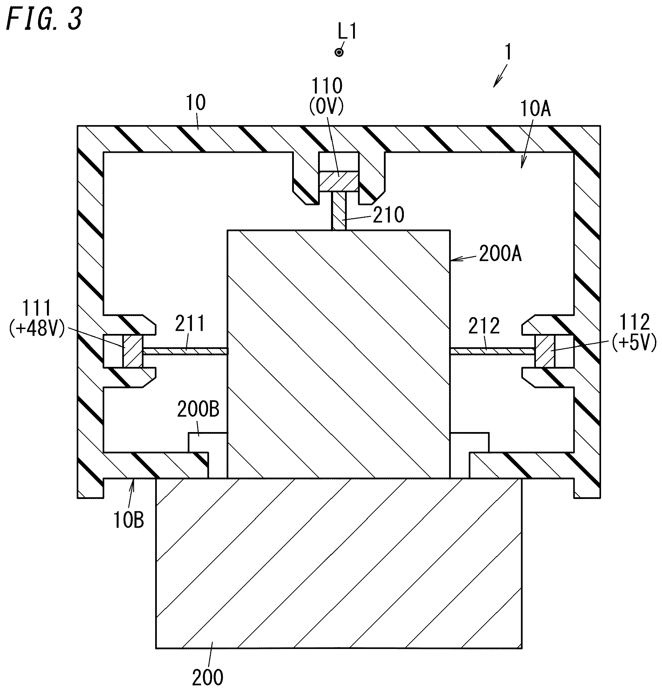

The load device 200 according to the embodiment has built therein three terminals (reference terminal 210, first terminal 211, and second terminal 212: hereinafter simply written as "210 to 212") that are connected to three conductors (reference conductor 110, first conductor 111, and second conductor 112: hereinafter written simply as "110 to 112") provided to a duct rail main unit 10, as illustrated in Fig. 2 and Fig. 3.

The load device 200 according to the first modification and the second modification further has built therein a third terminal 213 to a third conductor 113 further provided to the duct rail main unit 10, as illustrated in Fig. 4 to Fig. 6.

The load device 200 is retained at the duct rail main unit 10 in a state in which three or more terminals (210 to 212 or 210 to 213) are electrically connected to three or more conductors (110 to 112 or 110 to 113).

The load device 200 may include electrical equipment that operates under direct current electric power, and relay equipment that relays the direct current electric power to such electrical equipment. The relay equipment is, for example, various types of power outlets, such as illustrated in Fig. 1. The various types of power outlets are, for example, USB power outlets (DC 5 V), and various types of DC power outlets other than USB (power outlets such as DC 48 V, DV 24 V, and so forth: hereinafter simply written as "DC power outlet"), and so forth. The electrical equipment is, for example, information equipment such as smartphones or the like, which have USB terminals that are capable of connecting to the USB power outlets, light fittings such as LED lighting equipment and so forth, which have DC terminals that are capable of connecting to DC power outlets, and so forth.

Note that in the example in Fig. 1, the electrical equipment is detachably attachable to the relay equipment, and the load device 200 is configured by the electrical equipment being connected to the relay equipment, however, the load device 200 may be an arrangement in which the relay equipment and the electrical equipment are integrated in advance (omitted from illustration), for example. Also, the load device 200 may be, for example, electrical equipment of a type that is equipped with three or more terminals (210 to 212 or 210 to 213), a load driving circuit 22, and a load 23 such as an LED or the like, as illustrated in Fig. 2, Fig. 4, and Fig. 6 (i.e., terminal-built-in type electrical equipment).

Also, the electrical equipment is not limited to information equipment and lighting equipment. Anything may serve as the electrical equipment as long as it is equipment that is configured to be retainable directly by the duct rail main unit 10 or via relay equipment, and that operates under direct current electric power that is supplied via the duct rail main unit 10.

### (1-3) Wiring Duct Rail

The wiring duct rail 1 according to the embodiment of the present embodiment includes the three conductors of the reference conductor 110, the first conductor 111, and the second conductor 112 (110 to 112), and the duct rail main unit 10, as illustrated in Fig. 2.

### (1-3-1) Reference Conductor and Reference Potential

The reference conductor 110 is a linear conductor to which reference potential is imparted. The reference potential is a potential serving as a reference for direct current voltage. The reference potential is a certain potential (V0) that is set in advance, and is written as "reference potential V0" hereinafter. The reference potential V0 in the present embodiment is normally zero potential (V0 = 0). Note, however, that a value other than zero may be set for the reference potential V0.

### (1-3-1a) Linear Conductor

Linear normally is a form of a straight line, but may be, for example, a curved form such as an arc or the like. The conductor normally is a metal such as copper, aluminum, or the like, but may be a non-metal that has conductivity, such as carbon fiber or the like, for example. Note that these items also hold true for the linear conductors (111 to 113) other than the reference conductor 110.

### (1-3-2) First Conductor and First Potential

The first conductor 111 is a linear conductor to which a first potential V1 is imparted. The first potential V1 is a potential that differs from the reference potential V0 (V1 ≠ V0). The first potential V1 is a potential that has positive or negative polarity with respect to the reference potential V0, and has positive polarity when V0 < V1, and negative polarity when V1 < V0.

### (1-3-3) Second Conductor and Second Potential

The second conductor 112 is a linear conductor to which a second potential V2 is imparted. The second potential V2 is a potential that differs from both the reference potential V0 and the first potential V1 (V2 ≠ V0 and also V2 ≠ V1). The second potential V2 is a potential that has positive or negative polarity with respect to the reference potential V0 (positive polarity when V0 < V2, negative polarity when V2 < V0).

### (1-3-4) Duct Rail Main Unit

The duct rail main unit 10 is a main unit of the wiring duct rail 1. Three or more conductors (110 to 112), including the reference conductor 110, the first conductor 111, and the second conductor 112 are laid out in the duct rail main unit 10.

In detail, the duct rail main unit 10 is a housing that is hollow and elongated, formed of resin, such as illustrated in Fig. 1, Fig. 3, and Fig. 5, for example. The duct rail main unit 10 has a form such that enables the load device 200 to be retained so as to be capable of sliding movement along the lengthwise direction L1, in a state of being electrically in contact with the three or more conductors (110 to 112 or 110 to 113).

### (1-3-4a) Three or More Conductors

The three or more conductors that are laid out in the duct rail main unit 10 (hereinafter simply written as "three or more conductors") are the three conductors of the reference conductor 110, the first conductor 111, and the second conductor 112 (110 to 112), as illustrated in Fig. 2 and Fig. 3 in the embodiment.

Note that the three or more conductors are four conductors (110 to 113) in which the third conductor 113 is added to the three conductors (110 to 112) in the first modification and the second modification, as illustrated in Fig. 4 to Fig. 6, for example. Note, however, that the number of conductors laid out in the duct rail main unit 10 may be five or more, and may be any number as long as three or more.

The three or more conductors (110 to 112 or 110 to 113) are laid out in parallel to each other along the lengthwise direction L1 of the duct rail main unit 10, on an inner face side of the duct rail main unit 10, as illustrated in Fig. 1, Fig. 3, and Fig. 5, for example.

The duct rail main unit 10 retains the load device 200 so as to be capable of sliding movement along the lengthwise direction L1 in a state of being electrically in contact with the three or more conductors (110 to 112 or 110 to 113).

In further detail, the duct rail main unit 10 has a hollow structure in which a middle portion of a lower face thereof is open, as illustrated in Fig. 3 and Fig. 5, for example. The load device 200 is retained by the duct rail main unit 10 by protruding portions 200B provided on a lower end peripheral edge of an upper portion 200A of the load device 200 and peripheral edge portions 10B on the lower face of the duct rail main unit 10 fitting to each other, in a state in which the upper portion 200A of the load device 200 is accommodated in a hollow portion 10A of the duct rail main unit 10.

In a state in which the load device 200 is thus retained by the duct rail main unit 10, the three or more terminals (210 to 212 or 210 to 213) of the load device 200 are in electrical contact with the three or more conductors (110 to 112 or 110 to 113) of the duct rail main unit 10.

The three or more terminals (210 to 212 or 210 to 213) are, in the embodiment, the three terminals of the reference terminal 210, the first terminal 211, and the second terminal 212 (210 to 212), and are four terminals (210 to 213) of these three terminals (210 to 212) to which the third terminal 213 is added in the first modification and the second modification.

A plurality of direct current electric powers based on potential difference among three or more potentials including the reference potential V0, the first potential V1, and the second potential V2, are supplied to the load device 200 that is retained to the duct rail main unit 10, via the three or more conductors (110 to 112 or 110 to 113).

### (1-4) Overview of Embodiment

The three or more potentials are the three potentials (reference potential V0, first potential V1, and second potential V2) corresponding to the three conductors (110 to 112) in the embodiment, and two direct current electric powers based on potential difference among the three potentials (V0 to V2) are supplied to the load device 200. The two direct current electric powers are two direct current electric powers based on a potential difference of the first potential V1 with respect to the reference potential V0 (V1 - V0) and a potential difference of the second potential V2 with respect to the reference potential V0 (V2 - V0).

That is to say, the two direct current electric powers are a direct current electric power based on a first voltage ΔV1 that is the potential difference between the reference potential V0 and the first potential V1 (e.g., ΔV1 = V1 - V0), and a direct current electric power based on a second voltage ΔV2 that is the potential difference between the reference potential V0 and the second potential V2 (e.g., ΔV2 = V2 - V0).

In the embodiment, the two direct current electric powers are supplied from the power supply unit 12 making up a wiring system 100 which will be described later, to the load device 200, via the three conductors (110 to 112) of the wiring duct rail 1.

Note, however, that three direct current electric powers further including, in addition to the two direct current electric powers based on the two potential differences such as described above, another direct current electric power based on, for example, potential difference |ΔV2 - ΔV1| between the first voltage ΔV1 and the second voltage ΔV2 (in other words, potential difference |V2 - V1| between the first potential V1 and the second potential V2), may be supplied to the load device 200.

### (1-5) Overview of Modifications

In the first modification and the second modification, the three or more conductors are the four conductors (110 to 113) in which the third conductor 113 is added to the three conductors (110 to 112) of the embodiment, as illustrated in Fig. 4 to Fig. 6. Also, the "three or more potentials" in the modifications are four potentials (V0 to V3) in which a third potential V3 corresponding to the third conductor 113 is added to the three potentials (V0 to V2) corresponding to the three conductors (110 to 112) of the embodiment.

In the first modification, the wiring duct rail 1 further includes a potential generating unit 13 as illustrated in Fig. 4, with the potential generating unit 13 generating the third potential V3 on the basis of the first potential V1 and the second potential V2 (e.g., V3 = |V1 - V2|). The three direct current electric powers of the first voltage ΔV1 (= V1 - V0), the second voltage ΔV2 (= V2 - V0), and third voltage ΔV3 (= V3 (- V0), are supplied from the wiring duct rail 1 to the load device 200.

Note that the third voltage ΔV3 may be generated from one of the first voltage ΔV1 and the second voltage ΔV2 (in other words, from the reference potential V0, and one of the first potential V1 and the second potential V2), for example.

In the second modification, the wiring duct rail 1 does not include the potential generating unit 13, and only simply transmits the three direct current electric powers from the power supply unit 12 to the load device 200.

In this way, in the first modification and the second modification, the three direct current electric powers are supplied from the wiring duct rail 1 to the load device 200.

Note, however, that the number of direct current electric powers that are supplied may be four or more. For example, a fourth voltage ΔV4 may be further generated on the basis of the first voltage ΔV1 and the third voltage ΔV3, and a fifth voltage ΔV5 may also be further generated on the basis of the second voltage ΔV2 and the third voltage ΔV3, respectively. And then, five direct current electric powers of the first voltage ΔV1 through the fifth voltage ΔV5 may be supplied to the load device 200.

### (1-6) Advantages of Present Disclosure

As described above, in the present disclosure, the reference potential V0, the first potential V1, and the second potential V2 are respectively imparted to the reference conductor 110, the first conductor 111, and the second conductor 112 that are laid out in the duct rail main unit 10, in a state in which the load device 200 is retained by the duct rail main unit 10 so as to be capable of moving. Accordingly, a plurality of direct current electric powers with different voltages can be supplied to the load device 200 via the reference conductor 110, the first conductor 111, and the second conductor 112.

Supplying a plurality of direct current electric powers with different voltages to the load device 200 in this way can improve freedom in voltages that are used, while reducing electric power loss occurring at the time of voltage conversion, as compared with a case of converting from a single voltage to a desired voltage at the load device 200.

### (2) Primary Portions of Embodiment, and First Modification and Second Modification

Next, primary portions that are common to the embodiment, and the first modification and second modification, will be described. Note that description of items already described in the "Overview" will be omitted or simplified below.

### (2-1) First Direct Current Electric Power and Second Direct Current Electric Power

First direct current electric power and second direct current electric power are supplied to the load device 200 retained by the duct rail main unit 10 via: the reference conductor 110; and the first conductor 111 and the second conductor 112, respectively throughout the embodiment and the first modification and second modification.

The first direct current electric power is direct current electric power based on the first voltage ΔV1 that is the potential difference of the first potential V1 with respect to the reference potential V0 (= V1 - V0). The first direct current electric power is supplied to the load device 200 via the reference conductor 110 and the first conductor 111.

The second direct current electric power is direct current electric power based on the second voltage ΔV2 that is the potential difference of the second potential V2 with respect to the reference potential V0 (= V2 - V0). The second direct current electric power is supplied to the load device 200 via the reference conductor 110 and the second conductor 112.

In this way, the two direct current electric powers of the first voltage ΔV1 and the second voltage ΔV2 can be supplied via: the reference conductor 110; and the first conductor 111 and the second conductor 112, respectively.

### (2-2) Polarities of Reference Potential, and First Voltage and Second Voltage

Throughout the embodiment, and the first modification and second modification, the reference potential V0 is zero potential (V0 = 0). Note, however, that the reference potential V0 may be an appropriate potential other than zero.

In the embodiment, the first voltage ΔV1 and the second voltage ΔV2 have the same polarity with respect to zero potential (V0 = 0). Having the same polarity means that the first voltage ΔV1 and the second voltage ΔV2 are in a relation of 0 < ΔV1 and also 0 < ΔV2, or ΔV1 < 0 and also ΔV2 < 0.

Moreover, the first voltage ΔV1 is twice or more the second voltage ΔV2 (ΔV2 × 2 ≤ ΔV1).

The first voltage ΔV1 and the second voltage ΔV2 in the embodiment specifically are ΔV1 = +48 V and ΔV2 = +5 V, as illustrated in Fig. 2 and Fig. 3, for example. Note, however, that the first voltage ΔV1 and the second voltage ΔV2 may be ΔV1 = +48 V and ΔV2 = +24 V, ΔV1 = +36 V and ΔV2 = +12 V, or the like, for example. Also, the first voltage ΔV1 and the second voltage ΔV2 are not limited to being a set of positive values, and may be a set of negative values, such as for example, ΔV1 = -48 V and ΔV2 = -5 V, or the like.

Accordingly, the wiring duct rail 1 is capable of supplying direct current electric powers of the two voltages of the first voltage ΔV1, and the second voltage V2 that has the same polarity as the first voltage ΔV1 and an absolute value that is twice or more.

### (2-2-1) Modification of Polarities of First Voltage and Second Voltage

In this modification, the first voltage ΔV1 and the second voltage ΔV2 have polarities of which positive/negative are opposite, and also absolute values that are equal (|V1| = |V2|). Having have equal absolute values of which polarities of positive/negative are opposite means that the first voltage ΔV1 and the second voltage ΔV2 are in a relation of 0 < ΔV1 and also ΔV2 < 0, or ΔV1 < 0 and also 0 < ΔV2.

The first voltage ΔV1 and the second voltage ΔV2 in the first modification and the second modification specifically are, for example, ΔV1 = +24 V and ΔV2 = -24 V, but may be ΔV1 = +12 V and ΔV2 = -12 V or the like.

Accordingly, direct current electric powers of the two voltages of the first voltage ΔV1, and the second voltage ΔV2 that has an opposite polarity from the first voltage ΔV1 and the same absolute value, can be supplied.

Note, however, that the absolute values of the first voltage ΔV1 and the second voltage ΔV2 may be different. A specific example of the first voltage ΔV1 and the second voltage ΔV2 in such a case is ΔV1 = +24 V and ΔV2 = -12 V or the like. In this case, the wiring duct rail 1 is capable of supplying direct current electric powers of the two voltages of the first voltage ΔV1, and the second voltage ΔV2 that has an opposite polarity from the first voltage ΔV1.

### (3) Primary Portions Common to First Modification and Second Modification

Next, primary portions that are common to the first modification and the second modification will be described. Note that description of items already described in the "Primary Portions of Embodiment, and First Modification and Second Modification" will be omitted or simplified below.

### (3-1) Predetermined Potential: Third Potential

In the first modification and the second modification, the third potential V3 is imparted to the third conductor 113. The third potential V3 is a potential that is different from each of the reference potential V0, the first potential V1, and the second potential V2 (V3 ≠ V0 and also V3 ≠ V1 and also V3 ≠ V2). The third potential V3 is a potential that has positive or negative polarity with respect to the reference potential V0 (positive polarity when V0 < V3, and negative polarity when V3 < V0).

A third direct current electric power is further supplied to the load device 200 retained by the duct rail main unit 10 via the reference conductor 110 and the third conductor 113. The third direct current electric power is a direct current electric power based on the third voltage ΔV3 that is the potential difference of the third potential V3 with respect to the reference potential V0 (= V3 - V0).

According to the first modification and the second modification, the three direct current electric powers of the first voltage ΔV1, the second voltage ΔV2, and the third voltage ΔV3 can be supplied via: the reference conductor 110; and the first conductor 111, the second conductor 112 and the third conductor 113, respectively.

### (3-2) Third Conductor and Predetermined Potential

The wiring duct rail 1 according to the first modification and the second modification further has the linear third conductor 113 to which a predetermined potential is imparted, as illustrated in Fig. 4 to Fig. 6.

The third conductor 113 is further laid out in the duct rail main unit 10. The duct rail main unit 10 retains the load device 200 so as to be capable of sliding movement along the lengthwise direction L1 in a state of further being electrically in contact with the third conductor 113, in addition to the reference conductor 110, the first conductor 111, and the second conductor 112.

In the first modification and the second modification, the predetermined potential is the third potential V3 that is different from each of the reference potential V0, the first potential V1, and the second potential V2, as described earlier.

Note, however, that the predetermined potential may be the reference potential V0, which will be described in "Modification of Predetermined Potential" later. That is to say, the third conductor 113 may be another reference conductor (second reference conductor), separate from the reference conductor 110 (first reference conductor).

Alternatively, the predetermined potential may be a potential that changes (is modulated) in accordance with information for the load device 200 (e.g., control information for controlling operations of the load device 200), for example. That is to say, the third conductor 113 may be imparted with potential that is modulated in accordance with control information for the load device 200 (3 V pulses that are pulse-width-modulated, etc.), for example.

In this way, in the first modification and the second modification, further laying out the third conductor 113 in the duct rail main unit 10 enables power supply of even more varied direct current electric powers to be performed via four or more conductors (110 to 113). Accordingly, versatility of the wiring duct rail 1 can be improved. Note that while the third potential V3 (V3 ≠ V0 and also V3 ≠ V1 and also V3 ≠ V2), is imparted to the third conductor 113 in the first modification and the second modification, the reference potential V0 may be imparted, or potential that changes in accordance with information for the load device 200 may be imparted, for example.

### (3-2-1) Modification of Predetermined Potential

In this modification, the reference conductor 110 is the first reference conductor, and the reference potential V0 is further imparted to the third conductor 113, such that the third conductor 113 becomes the second reference conductor.

First direct current electric power via the first reference conductor and the first conductor 111, and also second direct current electric power via the second reference conductor and the second conductor 112, are supplied to the load device 200 retained by the duct rail main unit 10.

According to this modification, the two direct current electric powers of the first voltage ΔV1 and the second voltage ΔV2 can be supplied via a set of the first reference conductor and the first conductor 111, a set of the second reference conductor and the second conductor 112. Ease of sliding movement of the load device 200 can be realized due to the number of conductors laid out in the duct rail main unit 10 being four or more, as compared to a case in which supply of the two direct current electric powers of the first voltage ΔV1 and the second voltage ΔV2 is enabled via the single reference conductor 110, and the first conductor 111 and the second conductor 112.

### (4) Primary Portions of First Modification

Primary portions of the first modification will be described next. Note that description of items already described in the "Primary Portions of First Modification and Second Modification" will be omitted or simplified below.

### (4-1) Power Supply Unit

The three conductors (reference conductor 110, first conductor 111, and second conductor 112) making up the wiring duct rail 1 according to the first modification are imparted three potentials (reference potential V0, first potential V1, and second potential V2), respectively, from the power supply unit 12 that will be described later, and two direct current electric powers of the first voltage ΔV1 (= V1 - V0) and the second voltage ΔV2 (= V2 - V0) are supplied.

### (4-2) Potential Generating Unit

The wiring duct rail 1 according to the first modification further includes the potential generating unit 13, as illustrated in Fig. 4. Note that the potential generating unit 13 is provided to the duct rail main unit 10, as illustrated in Fig. 4 (specifically, built into the duct rail main unit 10, but may be externally mounted, for example).

The potential generating unit 13 generates the third potential V3 on the basis of the reference potential V0 that the reference conductor 110 is imparted with, the first potential V1 that the first conductor 111 is imparted with, and the second potential V2 that the second conductor 112 is imparted with. The potential generating unit 13 then imparts the third conductor 113 with the third potential V3 that is generated. The third potential V3 is the difference between the first potential V1 and second potential V2 (V3 = |V1 - V2|), for example, but is not limited to this.

In this way, in the first modification, the potential generating unit 13 generates the third potential V3 on the basis of the three types of potential of the reference potential V0, the first potential V1, and the second potential V2, and the third conductor 113 is imparted therewith, which enables power supply of direct current electric powers of even more varied voltages to the load device 200.

In detail, reduction in potential difference from the original potentials (reference potential V0, first potential V1, and second potential V2) for the potential to be generated (third potential V3) is enabled, as compared to a case of generating the third potential V3 on the basis of the two types of potential of the first potential V1 and the second potential V2, for example. Note that the potential difference here can be rephrased as voltage difference between the voltage after conversion (third voltage ΔV3) and the original voltages (first voltage ΔV1 and second voltage ΔV2), for example.

According to the first modification, the wiring duct rail 1 supplying direct current electric power of more varied voltages to the load device 200 does away with the need to perform voltage conversion at the load device 200, and electric power loss occurring at the time of potential generation (voltage conversion) can be reduced.

Note that in the first modification, due to the wiring duct rail 1 including the potential generating unit 13, supply of direct current electric power of varied voltages can be performed without increasing the number of types of direct current electric power (number of voltages) externally supplied thereto, as compared to the second modification. Accordingly, the power supply unit 12 according to the embodiment, for example, can be diverted for other uses.

### (5) Primary Portions of Second Modification

Primary portions of the second modification will be described next. Note that description of items already described in the "Primary Portions of First Modification and Second Modification" will be omitted or simplified below.

The four conductors (reference conductor 110, first conductor 111, second conductor 112, and third conductor 113) making up the wiring duct rail 1 according to the second modification are imparted four potentials (reference potential V0, first potential V1, second potential V2, and third potential V3), respectively, from the power supply unit 12 that will be described later, and three direct current electric powers of the first voltage ΔV1, the second voltage ΔV2, and the third voltage ΔV3 are supplied.

With the wiring duct rail 1 according to the second modification, the three direct current electric powers thus supplied from the power supply unit 12 are transmitted to the load device 200 via the four conductors (110 to 113).

According to the second modification, the wiring duct rail 1 supplying direct current electric power of even more varied voltages to the load device 200 does away with the need to perform voltage conversion at the load device 200, and electric power loss occurring at the time of potential generation (voltage conversion) can be reduced.

Note that in the second modification, the potential generating unit 13 not being included in the wiring duct rail 1 enables the configuration of the wiring duct rail 1 to be simplified as compared to the first modification.

### (6) Details

Details of the embodiment, and the first modification and second modification, will be described next. Note that description of items already described in the "Overview" and so forth will be omitted or simplified below.

The embodiment and the first modification and second modification of the present disclosure relate to the wiring duct rail 1, and the wiring system 100 that is equipped with the wiring duct rail 1, described above.

### (6-1) Wiring System

Throughout the embodiment and the first modification and second modification, the wiring system 100 includes the wiring duct rail 1 and the power supply unit 12, as illustrated in Fig. 1, Fig. 2, Fig. 4, and Fig. 6.

### (6-1-1) Power Supply Unit

The power supply unit 12 imparts the reference conductor 110, the first conductor 111, and the second conductor 112, which are laid out in the duct rail main unit 10 making up the wiring duct rail 1, with the reference potential V0, the first potential V1, and the second potential V2, respectively. The power supply unit 12 also performs supplying of at least the first direct current electric power and the second direct current electric power to the load device 200 retained by the duct rail main unit 10 via: the reference conductor 110; and the first conductor 111 and the second conductor 112, respectively.

With the wiring system 100 according to the first modification and the second modification, the third conductor 113 is further laid out in the wiring duct rail 1 (duct rail main unit 10), as described earlier. The power supply unit 12 supplies the first direct current electric power, the second direct current electric power, and the third direct current electric power to the load device 200, via: the reference conductor 110; and the first conductor 111, the second conductor 112 and the third conductor 113, respectively.

Thus, with the wiring system 100 according to the embodiment and the first modification and second modification, the power supply unit 12 supplies a plurality of direct current electric powers to the load device 200 retained by the wiring duct rail 1, via the three or more conductors (110 to 112) laid out in the wiring duct rail 1. Hence, supplying a plurality of direct current electric powers with different voltages to the load device 200 in this way can improve freedom in voltages that are used, while reducing electric power loss occurring at the time of voltage conversion, as compared with a case of converting from a single voltage to a desired voltage at the load device 200.

### (6-1-1a) Placement of Power Supply Unit

The power supply unit 12 in the embodiment and the first modification and second modification is integrated with the wiring duct rail 1 (duct rail main unit 10). In detail, the power supply unit 12 is externally mounted to the wiring duct rail 1 (duct rail main unit 10) as illustrated in Fig. 1, for example.

Note that while the power supply unit 12 is attached to one end of the duct rail main unit 10 in the example in Fig. 1, the location of attaching the power supply unit 12 may be any position of the duct rail main unit 10. The power supply unit 12 may be built into the duct rail main unit 10, for example.

Integrating the wiring duct rail 1 and the power supply unit 12 in this way enables providing of a wiring system 100 that does away with the need for routing of three or more connecting wires (omitted from illustration: to be described later) from the wiring duct rail 1 (duct rail main unit 10) to the power supply unit 12, which becomes necessary in a case of having a power supply unit 12 that is a separate unit.

### (6-1-1b) Modification of Placement of Power Supply Unit

The power supply unit 12 in this modification is a separate unit from the wiring duct rail 1 (duct rail main unit 10).

In this modification, three or more connecting wires (omitted from illustration) connected to the three or more conductors (110 to 112) including at least the reference conductor 110, the first conductor 111, and the second conductor 112 are routed from the duct rail main unit 10 to the power supply unit 12 that is a separate unit.

The power supply unit 12 is electrically connected to the three or more connecting wires that are routed from the duct rail main unit 10 in this way. Note that the potential generating unit 13 is also electrically connected to these three or more connecting wires.

In this way, including the power supply unit 12 as a separate unit from the wiring duct rail 1 enables providing of a wiring system 100 in which simplification of the wiring duct rail 1 is realized while adding power supply functions.

### (7) Specific Example

Next, specific examples of the embodiment, and the first modification and second modification, will be described.

### (7-1) Specific Example of Embodiment

The wiring system 100 according to this example includes the wiring duct rail 1 and the power supply unit 12, as illustrated in Fig. 1. The power supply unit 12 is integrated with the wiring duct rail 1. Specifically, the power supply unit 12 is externally mounted to one of two end portions that are perpendicular to the lengthwise direction L1 of the wiring duct rail 1. The wiring system 100 is attached to a ceiling (omitted from illustration) via a plurality (four here) of leg portions 104.

Note that the above items also hold true for each specific example of the first modification and the second modification.

The wiring duct rail 1 making up the wiring system 100 according to this example includes the three conductors (110 to 112) of the reference conductor 110, the first conductor 111, and the second conductor 112, and the duct rail main unit 10 in which the three conductors (110 to 112) are laid out, as illustrated in Fig. 2 and Fig. 3. The duct rail main unit 10 retains the load device 200 so as to be capable of sliding movement along the lengthwise direction L1 in a state of electrical contact with the three conductors (110 to 112).

The first direct current electric power based on the first voltage ΔV1 that is the potential difference of the first potential V1 with respect to the reference potential V0, and the second direct current electric power based on the second voltage ΔV2 that is the potential difference of the second potential V2 with respect to the reference potential V0, are supplied to the load device 200 retained by the duct rail main unit 10, via: the reference conductor 110; and the first conductor 111 and the second conductor 112, respectively.

In detail, the reference potential V0 is zero potential (0 volts: 0 V), the first potential V1 is 5 volts (+48 V), and the second potential V2 is 5 volts (+5 V), and accordingly the first voltage ΔV1 is +48 V, and the second voltage ΔV2 is +5 V.

The load device 200 according to this example is LED lighting equipment with built-in terminals, and includes the three terminals (210 to 212) of the reference terminal 210, the first terminal 211, and the second terminal 212, the load driving circuit 22, and the load 23, as illustrated in Fig. 2. The load 23 includes an LED and a control circuit (both omitted from illustration).

The power supply unit 12 imparts, to the three conductors (110 to 112) laid out in the duct rail main unit 10, the zero potential (0 V), the first potential V1 (+48 V), and the second potential V2 (+5 V), respectively. The zero potential (0 V), the first potential V1 (+48 V), and the second potential V2 (+5 V) that are imparted to the three conductors (110 to 112) are transmitted to the load driving circuit 22 making up the load device 200 via the three terminals (210 to 212), and the power supply unit 12 supplies the first direct current electric power of the first voltage ΔV1 (+48 V) and the second direct current electric power of the second voltage ΔV2 (+5 V) to the load device 200.

In the load device 200, the first direct current electric power of +48 V is supplied to the LED, and the second direct current electric power of +5 V to the control circuit, respectively, whereby the LED emits light under this first direct current electric power and the control circuit operates under this second direct current electric power.

### (7-2) Specific Example of First Modification

The wiring duct rail 1 making up the wiring system 100 according to this example includes the four conductors (110 to 113) of the reference conductor 110, the first conductor 111, the second conductor 112, and the third conductor 113, the duct rail main unit 10 in which the four or more conductors (110 to 112) are laid out, and the potential generating unit 13, as illustrated in Fig. 4 and Fig. 5. The duct rail main unit 10 retains the load device 200 so as to be capable of sliding movement along the lengthwise direction L1 in a state of electrical contact with the four conductors (110 to 113).

The first direct current electric power based on the first voltage ΔV1 that is the potential difference of the first potential V1 with respect to the reference potential V0, the second direct current electric power based on the second voltage ΔV2 that is the potential difference of the second potential V2 with respect to the reference potential V0, and the third direct current electric power based on the third voltage ΔV3 that is the potential difference of the third potential V3 with respect to the reference potential V0, are supplied to the load device 200 retained by the duct rail main unit 10, via: the reference conductor 110; and the first conductor 111, the second conductor 112 and the third conductor 113, respectively.

In detail, the reference potential V0 is zero potential (0 volts: 0 V), the first potential V1 is 24 volts (+24 V), the second potential V2 is -24 volts (-24 V), the third potential V2 is 48 volts (+48 V), and accordingly the first voltage ΔV1 is +24 V, the second voltage ΔV2 is -24 V, and the third voltage ΔV3 is +48 V.

The load device 200 according to this example is made up of relay equipment such as a DC power outlet or the like, and various types of electrical equipment, such as LED lighting equipment or the like that is detachably attachable to the DC power outlet. The relay equipment includes three DC power outlets of DC +24 V, DV -24 V, and DC +48 V, and the various types of electrical equipment are mountable to one of these three DC power outlets.

The load device 200 includes the four terminals (210 to 213) of the reference terminal 210, the first terminal 211, the second terminal 212, and the third terminal 213, the load driving circuit 22, and the load 23, as illustrated in Fig. 5. The four terminals (210 to 213) are connected to the three DC power outlets. Specifically, the reference terminal 210 and the first terminal 211 are connected to the DC +24 V power outlet, the reference terminal 210 and the second terminal 212 are connected to the DC -24 V power outlet, and the reference terminal 210 and the third terminal 213 are connected to the DC +48 V power outlet. The load 23 is the above various types of electrical equipment.

Note that of the above items, items relating to the load device 200 also hold true for a specific example of the second modification (see Fig. 6 and Fig. 5)

The power supply unit 12 according to this example imparts to the three conductors (110 to 112) of the reference conductor 110, the first conductor 111, and the second conductor 112 out of the four conductors (110 to 113) laid out in the duct rail main unit 10, the zero potential (0 V), the first potential V1 (+24 V), and the second potential V2 (-24 V), respectively. The zero potential (0 V), the first potential V1 (+24 V), and the second potential V2 (-24 V) imparted to the three conductors (110 to 112) are transmitted to the load driving circuit 22 making up the load device 200, via the three terminals (210 to 212) of the reference terminal 210, the first terminal 211, the second terminal 212, out of the four terminals (210 to 213). Accordingly, the power supply unit 12 is capable of supplying the first direct current electric power of the first voltage ΔV1 (+24 V) and the second direct current electric power of the second voltage ΔV2 (-24 V) to the load device 200.

Also, the potential generating unit 13 generates the third potential V3 (+48 V) on the basis of the three potentials (0 V, -24 V, +24 V) that are imparted to the three conductors (110 to 112), and imparts this to the third conductor 113. The third potential V3 (+48) that is imparted to the third conductor 113 is transmitted to the load driving circuit 22 making up the load device 200 via the third terminal 213, and accordingly the power supply unit 12 is capable of further supplying the third direct current electric power of the third voltage ΔV3 (+48 V) to the load device 200.

At the load device 200, when LED lighting equipment for DC +24 V is connected to the DC +24 V power outlet, for example, the first direct current electric power of DC +24 V is supplied from the power supply unit 12 to this LED lighting equipment, and this LED lighting equipment emits light under this first direct current electric power. Also, when LED lighting equipment for DC +48 V is connected to the DC +48 V power outlet, the third direct current electric power of DC +48 V is supplied from the power supply unit 12 to this LED lighting equipment, and this LED lighting equipment emits light under this third direct current electric power. Further, when electrical equipment for DC -24 V is connected to the DC -24 V power outlet, the second direct current electric power of DC -24 V is supplied from the power supply unit 12 to this electrical equipment, and this electrical equipment operates under this second direct current electric power.

### (7-3) Specific Example of Second Modification

The wiring duct rail 1 making up the wiring system 100 according to this example includes the four or more conductors (110 to 113) of the reference conductor 110, the first conductor 111, the second conductor 112, and the third conductor 113, and the duct rail main unit 10 in which the four conductors (110 to 113) are laid out, as illustrated in Fig. 6 and Fig. 5. That is to say, the wiring duct rail 1 according to this example has a configuration in which the potential generating unit 13 is omitted from the wiring duct rail 1 according to the specific example of the first modification (see Fig. 4).

The duct rail main unit 10 retains the load device 200 so as to be capable of sliding movement along the lengthwise direction L1 in a state of electrical contact with the four conductors (110 to 113), in the same way as in the first modification. The first direct current electric power of the first voltage ΔV1 (+24 V), the second direct current electric power of the second voltage ΔV2 (-24 V), and the third direct current electric power of the third voltage ΔV3 (+48 V), are supplied to the load device 200 retained by the duct rail main unit 10, via: the reference conductor 110; and the first conductor 111, the second conductor 112 and the third conductor 113, respectively, in the same way as in the first modification.

Note, however, that the power supply unit 12 according to this example respectively imparts the zero potential (0 V), the first potential V1 (+24 V), the second potential V2 (-24 V), and the third potential V3 (48 V) to the four conductors (110 to 113) that are laid out in the duct rail main unit 10. The zero potential (0 V), the first potential V1 (+24 V), the second potential V2 (-24 V), and the third potential V3 (+48 V), that are imparted to the four conductors (110 to 113) are transmitted to the load driving circuit 22 making up the load device 200 via the four terminals (210 to 213). Thus, the power supply unit 12 is capable of supplying first direct current electric power of the first voltage ΔV1 (+24 V), the second direct current electric power of the second voltage ΔV2 (-24 V), and the third direct current electric power of the third voltage ΔV3 (+48 V), to the load device 200. Operations of the power supply unit 12 thereafter are the same as those in the first modification.

### (8) Summarization

A wiring duct rail (1) according to a first aspect of the present disclosure includes three or more conductors (110 to 112), including a reference conductor (110), a first conductor (111), and a second conductor (112). The reference conductor (110) is a conductor to which is imparted a reference potential (V0). The first conductor (111) is a conductor to which is imparted a first potential (V1). The first potential (V1) is a potential that is different from the reference potential (V0). The second conductor (112) is a conductor to which is imparted a second potential (V2). The second potential (V2) is a potential that is different from each of the reference potential (V0) and the first potential (V1) (V2 ≠ V1). A plurality of direct current electric powers based on potential difference among three or more potentials (V0 to V2) that include the reference potential (V0), the first potential (V1), and the second potential (V2) (V1 - V0, V2 - V0, |V2 - V1|), are supplied to a load device (200) via the three or more conductors (110 to 112).

According to this aspect, by imparting the reference potential (V0), the first potential (V1), and the second potential (V2), to the reference conductor (110), the first conductor (111), and the second conductor (112), respectively, a plurality of direct current electric powers with different voltages can be supplied to the load device (200) via the reference conductor (110), the first conductor (111), and the second conductor (112). Thus, supplying a plurality of direct current electric powers with different voltages to the load device (200) in this way can improve freedom in voltages that are used, while reducing electric power loss occurring at the time of voltage conversion, as compared with a case of converting from a single voltage to a desired voltage at the load device (200).

According to the wiring duct rail (1) of a second aspect, in the first aspect, a first direct current electric power and a second direct current electric power are supplied to the load device (200) via: the reference conductor (110); and the first conductor (111) and the second conductor (112), respectively. The first direct current electric power is a direct current electric power based on a first voltage (ΔV1) that is a potential difference of the first potential (V1) with respect to the reference potential (V0) (V1 - V0). The second direct current electric power is a direct current electric power based on a second voltage (ΔV2 = V2 - V0) that is a potential difference of the second potential (V2) with respect to the reference potential (V0).

According to this aspect, two direct current electric powers of the first voltage (ΔV1) and the second voltage (ΔV2) can be supplied via: the reference conductor (110); and the first conductor (111) and the second conductor (112), respectively.

According to a third aspect, in the second aspect, the wiring duct rail (1) further includes a third conductor (113) to which is imparted a third potential (V3). The third potential (V3) is a potential that is different from each of the reference potential (V0), the first potential (V1), and the second potential (V2) (V3 ≠ V1 and also V3 ≠ V2). A third direct current electric power is further supplied to the load device (200) via the reference conductor (110) and the third conductor (113). The third direct current electric power is a direct current electric power based on a third voltage (ΔV3 = V3 - V0) that is a potential difference of the third potential (V3) with respect to the reference potential (V0).

According to this aspect, more varied direct current electric powers can be supplied via the four or more conductors (110 to 113), and versatility can be improved. Specifically, three direct current electric powers of the first voltage (ΔV1), the second voltage (ΔV2), and the third voltage (ΔV3) can be supplied via: the reference conductor (110); and the first conductor (111), the second conductor (112) and the third conductor (113), respectively. Note that the reference potential (V0), for example, may be imparted to the third conductor (113) instead of the third potential (V3), or a potential that changes in accordance with information for the load device (200) may be imparted.

According to a fourth aspect, in the third aspect, the wiring duct rail (1) further includes a potential generating unit (13). The potential generating unit (13) generates the third potential (V3) on the basis of the reference potential (V0) imparted to the reference conductor (110), the first potential (V1) imparted to the first conductor (111), and the second potential (V2) imparted to the second conductor (112). The potential generating unit (13) then imparts the third potential (V3) to the third conductor (113).

According to this aspect, the potential generating unit (13) generates the third potential (V3) on the basis of the three types of potential of the reference potential (V0), the first potential (V1), and the second potential (V2), and performs imparting thereof to the third conductor (113), thereby enabling even more varied direct current electric powers to be supplied to the load device (200). Potential difference of the potential to be generated (third potential V3) from the original potentials (reference potential V0, first potential V1, second potential V2) (in other words, voltage difference between the voltage following conversion (third voltage ΔV3) and the original voltage (first voltage ΔV1, second voltage ΔV2)) can be reduced, and electric power loss occurring at the time of generating potential (voltage conversion) can be reduced as compared with a case of generating the third potential (V3) on the basis of the two types of potential of the first potential (V1) and the second potential (V2).

According to the wiring duct rail (1) of a fifth aspect, in any one of the second to fourth aspects, the reference potential (V0) is zero potential (V0 = 0). The first voltage (ΔV1) and the second voltage (ΔV2) have same polarities (0 < ΔV1 and also 0 < ΔV2, or ΔV1 < 0 and also ΔV2 < 0). The first voltage (ΔV1) is twice or more the second voltage (ΔV2) (ΔV2 × 2 ≤ ΔV1).

According to this aspect, direct current electric power of two voltages of the first voltage (ΔV1), and the second voltage (ΔV2) that is of the same polarity as the first voltage (ΔV1) and also that has twice or more the absolute value, can be supplied.

According to the wiring duct rail (1) of a sixth aspect, in any one of the second to fourth aspects, the reference potential (V0) is zero potential (V0 = 0). The first voltage (ΔV1) and the second voltage (ΔV2) have opposite polarities (0 < ΔV1 and also ΔV2 < 0, or ΔV1 < 0 and also 0 < ΔV2).

According to this aspect, direct current electric power of two voltages of the first voltage (ΔV1), and the second voltage (ΔV2) that is of the opposite polarity from the first voltage (ΔV1), can be supplied.

According to the wiring duct rail (1) of a seventh aspect, in the sixth aspect, absolute values of the first voltage (ΔV1) and the second voltage (ΔV2) are equal.

According to this aspect, direct current electric power of the two voltages of the first voltage (ΔV1), and the second voltage (ΔV2) that is of the opposite polarity from the first voltage (ΔV1) and that has an equal absolute value, can be supplied.

According to an eighth aspect, a wiring system (100) includes the wiring duct rail (1) according to any one of the first to seventh aspects.

According to this aspect, in the same way as the first aspect, supplying a plurality of direct current electric powers with different voltages to the load device (200) can improve freedom in voltages that are used, while reducing electric power loss occurring at the time of voltage conversion, as compared with a case of converting from a single voltage to a desired voltage at the load device (200).

According to a ninth aspect, in the eighth aspect, the wiring system (100) further includes a power supply unit (12). The power supply unit (12) imparts the reference potential (V0), the first potential (V1), and the second potential (V2), to the reference conductor (110), the first conductor (111), and the second conductor (112), respectively. The power supply unit (12) also supplies at least a first direct current electric power and a second direct current electric power to the load device (200) via: the reference conductor (110), and the first conductor (111) and the second conductor (112), respectively. The first direct current electric power is a direct current electric power based on a first voltage (ΔV1) that is a potential difference of the first potential (V1) with respect to the reference potential (V0). The second direct current electric power is a direct current electric power based on a second voltage (ΔV2) that is a potential difference of the second potential (V2) with respect to the reference potential (V0).

According to this aspect, a wiring system (100) in which the power supply unit (12) supplies a plurality of direct current electric powers to the load device (200) via the three or more conductors (110 to 112) can be provided.

Note that in the wiring system (100) according to the ninth aspect, the power supply unit (12) may be integral with the wiring duct rail (1).

Integrating the wiring duct rail (1) and the power supply unit (12) in this way enables a wiring system (100) to be provided that does away with the need for routing of three or more connecting wires (omitted from illustration) from the wiring duct rail (1) to the power supply unit (12), which becomes necessary in a case of having a power supply unit (12) that is a separate unit.

Also, in the wiring system (100) according to the ninth aspect, the power supply unit (12) may be a separate unit from the wiring duct rail (1), and be electrically connected to the three or more connecting wires that are routed from the wiring duct rail (1).

In this way, including the power supply unit (12) as a separate unit from the wiring duct rail (1) enables a wiring system 100 to be provided in which simplification of the wiring duct rail (1) is realized while adding power supply functions.

According to a tenth aspect, in the ninth aspect, the wiring system (100) further includes a third conductor (113). The third conductor (113) is a conductor to which is imparted a third potential (V3). The third potential (V3) is a potential that is different from each of the reference potential (V0), the first potential (V1), and the second potential (V2) (V3 ≠ V1 and also V3≠ V2).

According to this aspect, more varied direct current electric powers can be supplied to the load device (200) via the four or more conductors (110 to 113), and versatility can be improved.

According to an eleventh aspect, in the tenth aspect, the wiring system (100) further includes a potential generating unit (13). The potential generating unit (13) generates the third potential (V3) on the basis of the reference potential (V0) imparted to the reference conductor (110), the first potential (V1) imparted to the first conductor (111), and the second potential (V2) imparted to the second conductor (112). The potential generating unit (13) then imparts the third potential (V3) to the third conductor (113). The power supply unit (12) further supplies a third direct current electric power based on a third voltage (ΔV3) to the load device (200), via the reference conductor (110), the potential generating unit (13), and the third conductor (113).

According to this aspect, the potential generating unit (13) generates the third potential (V3) on the basis of the three types of potential of the reference potential (V0), the first potential (V1), and the second potential (V2), and performs imparting the third potential (V3)to the third conductor (113), thereby enabling direct current electric powers of even more varied voltages to be supplied to the load device (200). Potential difference between the third potential to be generated (V3) and the original potentials (V0 to V2) (voltage difference between the third voltage ΔV3 following conversion and the original voltage ΔV1 or ΔV2) can be reduced, and electric power loss occurring at the time of generating potential (voltage conversion) can be reduced as compared with a case of generating the third potential (V3) based on the two types of potential of the first potential (V1) and the second potential (V2).

Note that in the wiring system (100) according to the eleventh aspect, the potential generating unit (13) may be provided to the wiring duct rail (1).

Providing the potential generating unit (13) to the wiring duct rail (1) in this way enables a wiring system (100) to be provided that is capable of generating the third potential (V3) on the basis of the reference potential (V0), the first potential (V1), and the second potential (V2) at the wiring duct rail (1), even if only the reference potential (V0), the first potential (V1), and the second potential (V2) are externally imparted and the third potential (V3) is not imparted.

According to the wiring system (100) of a twelfth aspect, in the tenth aspect, the power supply unit (12) further imparts the third potential (V3) to the third conductor (113), and also further supplies a third direct current electric power based on a third voltage that is a potential difference of the third potential (V3) with respect to the reference potential (V0) (ΔV3 = V3 - V0), to the load device (200), via the reference conductor (110) and the third conductor (113).

According to this aspect, the power supply unit (12) further imparts the third potential (V3) to the third conductor (113), and further supplies the third direct current electric power based on the third voltage (ΔV3 = V3 - V0) via the reference conductor (110) and the third conductor (113), thereby enabling direct current electric powers of even more varied voltages to be supplied to the load device (200).

### Reference Signs List

- 100: Wiring system
- 1: Wiring duct rail
- 110: Reference conductor
- 111: First conductor
- 112: Second conductor
- 113: Third conductor
- 12: Power supply unit
- 13: Potential generating unit
- 200: Load device
- L1: Lengthwise direction
- V0: Reference potential
- V1: First potential
- V2: Second potential
- V3: Third potential
- ΔV1: First voltage
- ΔV2: Second voltage
- ΔV3: Third voltage

## Claims

1. A wiring duct rail, comprising:
three or more conductors, including
a reference conductor to which a reference potential is imparted,
a first conductor to which a first potential that is a potential different from the reference potential is imparted, and
a second conductor to which a second potential that is a potential different from each of the reference potential and the first potential is imparted,
a plurality of direct current electric powers based on a potential difference among three or more potentials that include the reference potential, the first potential, and the second potential being supplied to a load device via the three or more conductors.

2. The wiring duct rail according to claim 1, wherein
a first direct current electric power based on a first voltage that is a potential difference of the first potential with respect to the reference potential and a second direct current electric power based on a second voltage that is a potential difference of the second potential with respect to the reference potential are supplied to the load device via: the reference conductor; and the first conductor and the second conductor, respectively.

3. The wiring duct rail according to claim 2, further comprising:
a third conductor to which a third potential that is a potential different from each of the reference potential, the first potential, and the second potential is imparted, wherein
a third direct current electric power based on a third voltage that is a potential difference of the third potential with respect to the reference potential is further supplied to the load device via the reference conductor and the third conductor.

4. The wiring duct rail according to claim 3, further comprising:
a potential generating unit that generates the third potential on the basis of the reference potential imparted to the reference conductor, the first potential imparted to the first conductor, and the second potential imparted to the second conductor, and imparts the third potential to the third conductor.

5. The wiring duct rail according to any one of claims 2 to 4, wherein
the reference potential is a zero potential,
the first voltage and the second voltage have same polarities, and
the first voltage is twice or more the second voltage.

6. The wiring duct rail according to any one of claims 2 to 4, wherein
the reference potential is a zero potential, and
the first voltage and the second voltage have opposite polarities.

7. The wiring duct rail according to claim 6, wherein
absolute values of the first voltage and the second voltage are equal.

8. A wiring system, comprising:
the wiring duct rail according to claim 1.

9. The wiring system according to claim 8, further comprising:
a power supply unit that imparts the reference potential, the first potential, and the second potential, to the reference conductor, the first conductor, and the second conductor, respectively, and also supplies at least a first direct current electric power based on a first voltage that is a potential difference of the first potential with respect to the reference potential and a second direct current electric power based on a second voltage that is a potential difference of the second potential with respect to the reference potential to the load device via: the reference conductor; and the first conductor and the second conductor, respectively.

10. The wiring system according to claim 9, further comprising:
a third conductor to which a third potential that is a potential different from each of the reference potential, the first potential, and the second potential is imparted.

11. The wiring system according to claim 10, further comprising:
a potential generating unit that generates the third potential on the basis of the reference potential imparted to the reference conductor, the first potential imparted to the first conductor, and the second potential imparted to the second conductor, and imparts the third potential to the third conductor, and also supplies a third direct current electric power based on a third voltage that is a potential difference of the third potential with respect to the reference potential, to the load device, via the reference conductor and the third conductor, wherein
the power supply unit further supplies the third direct current electric power based on the third voltage to the load device, via the reference conductor, the potential generating unit, and the third conductor.

12. The wiring system according to claim 10, wherein
the power supply unit further imparts the third potential to the third conductor, and also further supplies a third direct current electric power based on a third voltage that is a potential difference of the third potential with regard to the reference potential, to the load device, via the reference conductor and the third conductor.
